(19) Europäisches Patentamt
European Patent Office
Office européen des brevets

(11) **EP 3 031 564 B1**

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(21) Anmeldenummer: **15192873.6**

(22) Anmeldetag: **04.11.2015**

(51) Int Cl.:
*B23K 11/00* (2006.01)   *B23K 11/14* (2006.01)
*B23K 11/16* (2006.01)   *B21J 15/02* (2006.01)
*B23P 11/00* (2006.01)   *F16B 5/04* (2006.01)
*F16B 5/08* (2006.01)   *F16B 19/08* (2006.01)
*F16B 37/06* (2006.01)   *B23K 11/34* (2006.01)
*B23K 101/18* (2006.01)

(54) **HILFSELEMENT ZUM EINPRESSEN IN EINE ERSTEN BAUTEIL FÜR EIN SCHWEISSVERFAHREN ZWISCHEN ZWEI NICHT DIREKT MITEINANDER VERSCHWEISSBARE BAUTEILE**

HELP ELEMENT FOR PRESSING INTO A FIRST WORK PIECE IN A WELDING PROCESS BETWEEN TWO WORKPIECES NOT DIRECTLY WELDABLE

ELEMENT AUXILIAIRE POUR ETRE PRESSE DANS UNE PREMIERE PIECE DANS UN PROCEDE DE SOUDAGE DE PIECES NON SOUDABLES DIRECTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.12.2014 DE 102014225458**

(43) Veröffentlichungstag der Anmeldung:
**15.06.2016 Patentblatt 2016/24**

(73) Patentinhaber: **Volkswagen Aktiengesellschaft 38440 Wolfsburg (DE)**

(72) Erfinder: **PIETSCH, Tommy 08412 Werdau (DE)**

(56) Entgegenhaltungen:
**WO-A1-2015/024698    DE-A1-102012 020 223**
**FR-A- 445 030    US-A- 2 700 087**
**US-B1- 6 722 013**

**Beschreibung**

Die Erfindung betrifft ein Hilfselement zum thermischen Fügen von wenigstens zwei Bauteilen gemäß dem Oberbegriff des Anspruchs 1 (siehe z.B. US6 722 013 B1), wobei die zwei Bauteile aus unterschiedlichen Materialien (Mischbauweise), vorzugsweise Metall-Werkstoffen ausgebildet sind, die sich nicht oder sehr schlecht direkt miteinander verschweißen lassen. Dieses Hilfselement wird zunächst mechanisch in das erste, nicht oder schlecht schweißbare Bauteil eingebracht, vorzugsweise eingepresst oder eingeprägt. Das Hilfselement besteht dabei aus dem gleichen oder einem ähnlichen Material wie das zweite zu verbindende Bauteil, so dass nunmehr ein thermisches Fügen, vorzugsweise Verschweißen der beiden Bauteile über den Kontakt mit dem Hilfselement möglich ist.

Verfahren und Vorrichtungen zum Fügen von Bauteilen unterschiedlicher Metallwerkstoffe durch Widerstandsschweißen unter Einsatz eines Hilfselementes in Form eines Widerstandsschweißelementes sind aus dem Stand der Technik bekannt.

So beschreibt zum Beispiel die Offenlegungsschrift DE 10 2012 020 222 A1 ein Verfahren, bei dem ein Bauteilverbund mittels eines Widerstandsschweißelementes mit einem weiteren Bauteil verschweißt wird. Dazu wird dort zunächst das Widerstandsschweißelement in den Bauteilverbund eingepresst und bildet mit seiner über die Oberfläche des Bauteilverbundes hervorstehende Oberfläche einen Schweißkopf, über den in einem anschließenden Schweißverfahren der Bauteilverbund mit dem weiteren Bauteil verschweißt wird.

Aus der Offenlegungsschrift DE 10 2012 020 223 A1 ist ein weiteres Verfahren zum Fügen oder Verbinden von wenigstens zwei aus unterschiedlichen Metallwerkstoffen gebildeten Bauteilen bekannt, wobei auch dort diese Bauteile über ein Schweißhilfselement miteinander verschweißt werden. Dabei wird dort das Hilfselement durch ein Reibschweißverfahren mit dem ersten Bauteil verbunden.

Aus der Schrift WO 2012/041515 ist ein weiteres gattungsgemäßes Fügeverfahren zum Verbinden zweier Bauteile bekannt, die sich nicht direkt miteinander verschweißen lassen. Dabei wird auch dort ein Hilfselement in eines der Bauteile eingestanzt und das andere Bauteil in einem weiteren Verfahrensschritt über ein Widerstandsschweißverfahren am Hilfselement verbunden.

Des Weiteren zeigt das Dokument WO 2015/024698 A1 ein Verfahren zum Fügen zweier Bauteile mittels eines Hilfselementes, das in einem vorgelagerten mechanischen Fügeprozess in eines der beiden Bauteile eingepresst wird. Dabei ist das Hilfselement aus einem gut verschweißbaren Werkstoff und wird in das Bauteil aus einem schlechter verschweißbaren Werkstoff eingepresst. Das Hilfselement ist dabei als zylindrisches Bauteil ausgebildet. Die Schrift US 6,722,013 B1 offenbart ein Fügeverfahren zweier Bauteile mittels eines Verbindungsteiles, welches so in die beiden aneinanderliegenden Bauteile eingepresst wird, dass ein Hinterschnitt in beiden Bauteilen entsteht, über den diese formschlüssig miteinander verbunden sind. Alternativ kann dort die freie Stirnseite des Verbindungsteiles zum Fügen mit weiteren Bauteilen verwendet werden. Auch die Schrift FR 445 030 zeigt ein Fügeverfahren zum Verbinden zweier metallischer Bauteile unter Zwischenschaltung eines Zwischenelementes, wobei dort alle drei Bauteile eine hohe elektrische Leitfähigkeit zur Weiterleitung des Schweißstromes aufweisen müssen. Bei diesem Verfahren erfolgt kein mechanisches Einpressen des Zwischenelementes, sondern ein Verschweißen mit beiden Bauteilen.

Auf diese Weise lassen sich voneinander verschiedene metallische Werkstoffe, die im Wesentlichen nicht mit einem konventionellen Schweißprozess thermisch fügbar sind, durch Verwendung des Hilfselementes miteinander verschweißen.

Dabei weisen die bekannten Verfahren jedoch den Nachteil auf, dass die exakte Zuführung und Positionierung der Schweißhilfselemente an das erste Bauteil einen hohen Aufwand innerhalb einer Serienfertigung verursachen und zudem hohe Anforderungen an die Prozess-Sicherheit stellen.

Insbesondere vor dem Hintergrund, dass bei einem sogenannten Prägeelementschweißen die Hilfselemente in einem ersten Schritt in einer exakten Lage und Ausrichtung in ein erstes Blechbauteil eingeprägt werden, wobei matrizenseitig ein Hinterschnitt erzeugt wird, wird die Bedeutung einer exakten Lagepositionierung der Hilfselemente deutlich.

Der Erfindung liegt daher die Aufgabe zugrunde, ein Hilfselement der eingangs genannten Art anzugeben, welches insbesondere eine einfache und prozesssichere Art der Zuführung und Lagepositionierung desselben ermöglicht.

Ausgehend von einem Hilfselement zum Einpressen in ein erstes Bauteil für ein Schweißverfahren zwischen zwei nicht direkt miteinander verschweißbare Bauteile, wobei das Hilfselement zylinderförmig ausgebildet ist und an seinen beiden, die zylindrische Umfangswand in Achsrichtung abschließenden Stirnseiten die gleichen Konturen aufweist, wird die gestellte Aufgabe dadurch gelöst, dass die Stirnseiten in einem durch die Achse verlaufenden Längsschnitt eine W-förmige Kontur aufweisen, die Stirnseiten eine Ringnut aufweisen, die einen axial zentral angeordneten Stegbereich von einem radial außen liegenden Ringstegbereich trennt, wobei die Abmessungen der Ringnut, des zentralen Stegbereiches und des radial außen liegenden Ringstegbereiches in beiden gegenüberliegenden Stirnseiten des Hilfselementes identisch sind, wobei die Ringnut einen sich verjüngenden Querschnitt aufweist, und wobei ein radial innen liegender Einlaufwinkel (alpha) der Ringnut steiler zu einer Längsachse des Hilfselementes ausgebildet ist, als ein radial außen liegender Einlaufwinkel (beta) der Ringnut, siehe Anspruch 1. Bevorzugte Weiterbildungen und Ausgestaltungen ergeben sich sowohl aus den abhängigen Unteransprüchen als auch aus den nachfolgenden Erläuterungen.

Einen besonderen Vorteil stellt die erfindungsgemäße Geometrie des Hilfselementes gemäß den Patentansprüchen 1 und 2 dar.

Dabei ist es besonders vorteilhaft, dass das Hilfselement an seinen beiden axialen Stirnseiten in symmetrischer Ausführung exakt die gleiche Kontur bzw. Geometrie aufweist. Auf diese Weise ist es möglich, auf eine Ausrichtung der Lage und eine exakte Zuordnung einer der Stirnseiten der Hilfselemente zu verzichten, was den Handhabungsaufwand der Hilfselemente und somit den Fertigungsaufwand erheblich verringert. Der Fertigungsschritt der gezielten Ausrichtung der Hilfselemente kann komplett entfallen. Da somit auch die Fehlermöglichkeit einer falschen Ausrichtung der Hilfselemente eliminiert ist, erhöht sich die Prozess-Sicherheit gegenüber bekannten Lösungen erheblich.

Dabei erweist sich eine in Längsschnitt-Richtung gesehene W-Kontur, die aus einer in die Stirnseiten des Hilfselementes eingebrachte Ringnut gebildet wird, als besonders vorteilhaft. Auf diese Weise wird die Bildung des Hinterschnittes und die Ausbildung des Schweißbuckels am Hilfselement erheblich unterstützt.

Das Hilfselement wird dabei vorzugsweise in einem kaltgeschlagenen Herstellungsprozess produziert, wobei im zentralen Stegbereich Rohlingstoleranzen aufgenommen werden können, die keinen Einfluss auf den anschließenden Fügeprozess ausüben. Durch diese höhere Fertigungstoleranz kann der Aufwand hinsichtlich einer Prozessüberwachung noch einmal deutlich gegenüber den bekannten Lösungen verringert werden.

Die zu fügenden Bauteile können mit einem einzelnen Hilfselement in der zuvor erläuterten Weise miteinander gefügt werden. Bevorzugt ist jedoch vorgesehen, dass die zu fügenden Bauteile mit mehreren Hilfselementen in der zuvor erläuterten Weise miteinander gefügt werden, so dass ein derart hergestellter Bauteilverbund bzw. Schweißverbund eine Vielzahl von Fügestellen aufweist.

Bei den zu fügenden Bauteilen handelt es sich insbesondere um Karosseriebauteile, so dass das erfindungsgemäße Verfahren insbesondere zur Herstellung von Fahrzeugbauteilen verwendet werden kann.

Weitere Vorteile, vorteilhafte Merkmale, Eigenschaften und Aspekte der vorliegenden Erfindung ergeben sich aus der nachfolgenden Beschreibung der Ausführungsbeispiele und der dargestellten Figuren.

Es zeigen:

Figur 1 A:      eine Darstellung einer Vorrichtung zum Einpressen des Hilfselementes in Ausgangslage mit aufgesetztem Hilfselement

Figur 1 B:      eine Darstellung der Vorrichtung zum Einpressen des Hilfselementes in Endlage mit eingepresstem und verformtem Hilfselement

Figur 2 A:      eine Darstellung der Fügekonstellation mit angelegten Schweißelektroden

Figur 2 B:      einen Ausschnitt aus der Figur 2A, mit der Darstellung der Schweißlinse nach dem Schweißprozess

Figur 3 A- F:      eine Darstellung des Hilfselementes in unterschiedlichen Ansichten und unterschiedlichen Geometrien

Figur 4:      eine vergrößerte Darstellung des erfindungsgemäßen Hilfselementes mit geometrischen Bezeichnungen

Figur 5:      eine vergrößerte Detailansicht aus Figur 4 mit der geometrischen Darstellung der Ringnut

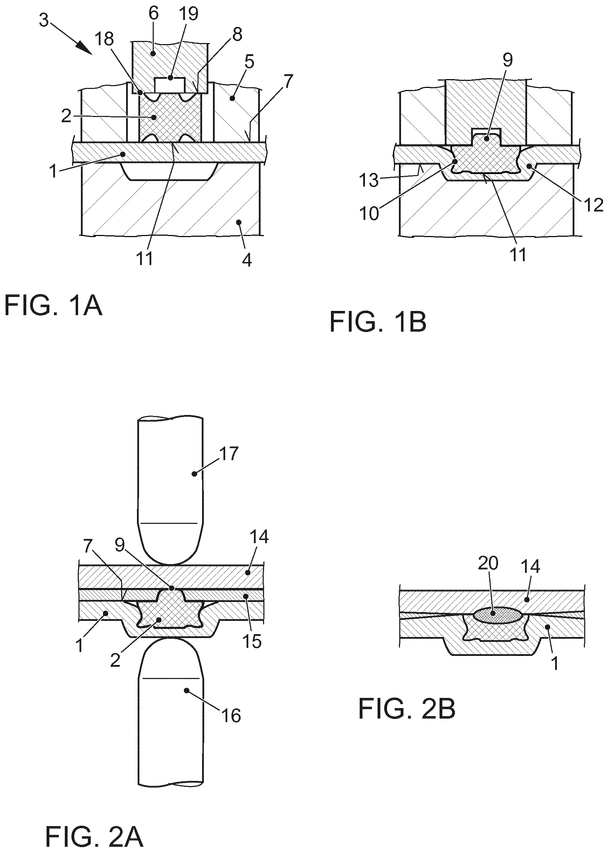

Die Figur 1A zeigt ein Ausführungsbeispiel der Vorrichtung zur Durchführung eines Verfahrens zum Fügen von wenigstens zwei Bauteilen unterschiedlicher Werkstoffe (Mischbauweise).

Dabei ist dort ein erstes Bauteil 1, vorzugsweise aus einem Blechwerkstoff, zwischen einer Matrize 4 und einem Niederhalter 5 einer Fügevorrichtung 3 eingespannt. Auf einer oberen Stirnfläche 7 des ersten Bauteiles 1 liegt ein Hilfselement 2, das im weiteren Verfahren in das erste Bauteil 1 eingebracht werden soll und in einem späteren Verfahrensabschnitt der thermischen Verbindung mit weiteren Bauteilen dient.

Das Hilfselement 2 wird auf seiner oberen, dem ersten Bauteil 1 abgewandten Stirnfläche 8 von einem Stempel 6 der Fügevorrichtung 3 beaufschlagt, der an seiner freien, dem Hilfselement 2 zugewandten Stirnseite 18 eine Ausnehmung 19 in Form einer Sacklochbohrung aufweist. Mit seiner dem Stempel 6 abgewandten Stirnfläche 11 liegt das Hilfselement 2 auf der oberen Stirnfläche 7 des ersten Bauteiles 1 auf.

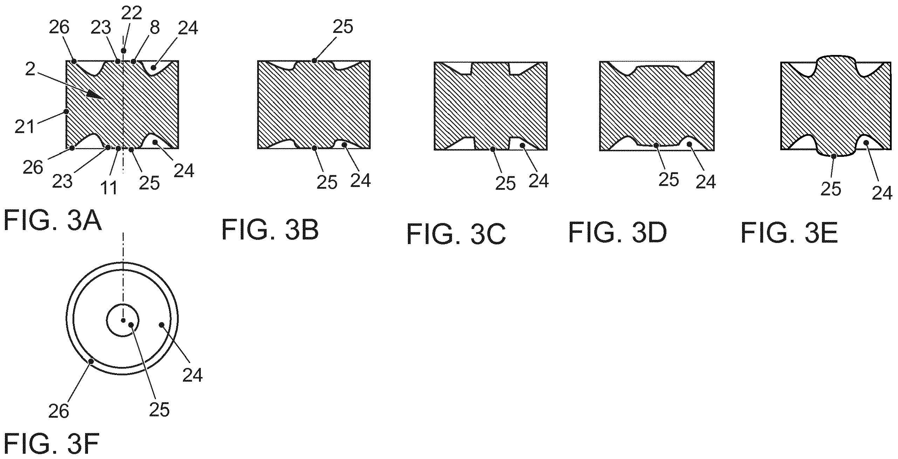

In einem ersten, in der Figur 1B dargestellten Verfahrensschritt wird nunmehr das Hilfselement 2, vorzugsweise in einem Kaltumform-Prozess, kraft- und formschlüssig in das erste Bauteil 1 eingepresst, wobei auch die Form des ersten Bauteiles 1, der Geometrie der Matrize 4 folgend, verformt wird. Dabei setzt der Stempel 6 zuerst auf einen umlaufenden Ringsteg 26 (vergleiche Figur 3 A) an der oberen Stirnfläche 8 des Hilfselementes 2 auf und formt diesen während des Fügeprozesses um, wobei das Ringstegmaterial radial nach außen verdrängt wird. Gleichzeitig dringt ein zentraler Steg 25 (vergleiche Figur 3A) des Hilfselementes 2 in die Ausnehmung 19 am Stempel 6 ein und stellt dort Material für die weitere Ausformung eines Schweißbuckels 9 zur Verfügung. Dabei kann der zentrale Steg 25 am Hilfselement in seiner ursprünglichen Geometrie erhalten bleiben oder er wird durch die Form der Ausnehmung 19 im Stempel 6 umgeformt. Nach dem Fügeprozess befindet sich die Stirnfläche 8 des Hilfselementes 2 nahezu auf der Ebene der Stirnfläche 7 des ersten Bauteiles 1. Lediglich der zentrale Steg 25 bildet jetzt einen vorstehenden Schweißbuckel 9. Matrizenseitig dringt die Kontur des Hilfselementes 2 in das erste Bauteil 1 ein und eine Ringnut 24 in einer Stirnseite 23 (vergleiche Figur 3A) des Hilfselementes (2) wird mit dem Werkstoff des Hilfselementes 2 gefüllt. Durch den Materialstau in der Ringnut 24 und eine nach außen ansteigende schräge Kontur der Ringnut 24 wird der Ringsteg 26 nach außen umgeformt und bildet einen Hinterschnitt 10 im ersten Bauteil 1. Gleichzeitig legt sich eine untere Stirnfläche 13 des ersten Bauteiles 1 an die Form der Matrize 4 an und bildet eine Ausformung 12 am ersten Bauteil 1, wobei das Hilfselement 2 nicht aus der unteren Stirnfläche 13 hervorragt, sondern innerhalb der Ausformung 12 vollständig im Material des ersten Bauteiles verbleibt.

In einem anschließenden, in den Figuren 2A und 2B dargestellten Verfahrensschritt wird ein zweites Bauteil 14 aus einem schweißbaren Material unter Zwischenauftrag einer Klebstoffschicht 15 auf die obere Stirnfläche 7 des ersten Bauteiles 1 aufgesetzt. Dabei kontaktiert das Hilfselement 2 am Schweißbuckel 9 direkt das zweite Bauteil 14. Über zwei Schweißelektroden 16, 17 wird im Folgenden ein Schweißstrom eingeleitet, wobei das Material des ersten Bauteiles 1 zumindest stromleitend sein muss. Anschließend erfolgt ein thermisches Fügen, vorzugsweise ein Verschweißen (z.B. Widerstandspunktschweißen), bei dem sich eine in der Figur 2B näher dargestellte Schweißlinse 20 am ehemaligen Schweißbuckel 9 ausbildet und die das erste Bauteil 1 über das eingepresste Hilfselement 2 stoffschlüssig mit dem zweiten Bauteil 14 verbindet. Der Klebstoff 15 zwischen den Bauteilen 1, 14 dient dabei einer zusätzlichen Befestigung der Bauteile miteinander und verhindert zudem eine mögliche Kontakterosion.

Die Materialien/Werkstoffe des Hilfselementes 2 und des zweiten Bauteiles 14 müssen dabei schweißkompatibel zueinander und das Material/Werkstoff des ersten Bauteiles 1 muss umformbar und elektrisch leitend sein.

Die Figuren 3A bis 3E zeigen verschiedene Beispiele eines Hilfselementes, wobei die Figur 3F zusätzlich eine Draufsicht des Hilfselementes 2 zeigt.

Das Hilfselement 2 weist eine zylindrische, rotationssymmetrische Kontur mit einer zylindrischen Umfangswand 21 auf.

Die Figuren 3A bis 3E zeigen 5 Beispiele in einem Längsschnitt entlang der Zylinderachse 22 des Hilfselementes 2. In dieser Darstellung ist eine W-förmige Kontur der Stirnseiten 23 des Hilfselementes 2 gezeigt, wobei die gegenüberliegenden Stirnseiten 23 symmetrisch ausgebildet sind und die gleiche Form aufweisen.

Um diese W-förmige Kontur zu erzielen, ist, wie in der Figur 3F dargestellt, in die Stirnflächen 8,11 der Stirnseiten 23 eine Ringnut 24 eingebracht, die einen axial zentralen Stegbereich 25 von einem radial außen liegenden Ringstegbereich 26 abtrennt.

Die Konturen der Stirnseiten 23 des Hilfselementes 2 unterscheiden sich in den Ausführungsbeispielen der Figuren 3A bis 3E lediglich in der Höhe des zentralen Stegbereiches 25 und der Ausbildung der Ringnut 24, insbesondere der Ausbildung ihrer Seitenwände 27. Dabei lässt sich über die Geometrie der Ringnut 24 und die Höhe des Stegbereiches 25 die Verformung des Hilfselementes 2 während des Einpressvorganges zielgerichtet beeinflussen. Die bevorzugte Form des Hilfselementes 2 ist in der Figur 3A gezeigt.

Insbesondere die relativ filigrane Ausbildung des radial außen liegenden Ringstegbereiches 26 ermöglicht ein frühzeitiges Aufspreizen im Material des ersten Bauteiles 1. Daraus resultiert wiederum eine stärkere Restdicke des Materials des ersten Bauteiles 1 in dessen Bodenbereich der Ausformung 12. Somit ist es möglich eine flachere Matrize 4 gegenüber bekannten Hilfselementen 2 (z.B. Prägeelementen) zu verwenden, wodurch eine Störkontur an der Stirnfläche 13 weiter reduziert werden kann.

Ein weiterer Vorteil der filigranen Geometrie des Ringstegbereiches 26 zeigt sich in einem dem Stempel 6 nahen Bereich. Dort kann der Stempel 6 den Ringsteg 26 flach drücken. Bei diesem Umformprozess findet gleichzeitig ein Breiten des Hilfselementes 2 statt. Dieses Breiten erfolgt hauptsächlich gegen Ende des Einpressvorganges und minimiert den seitlichen Spalt zwischen Hilfselement 2 und erstem Bauteil1. Durch diesen breiteren stempelseitigen Elementbereich kann die Gefahr einer Direktkontaktierung zwischen dem ersten Bauteil 1 und dem zweiten Bauteil 14 verringert werden, was zu einem stabileren Schweißprozess führt.

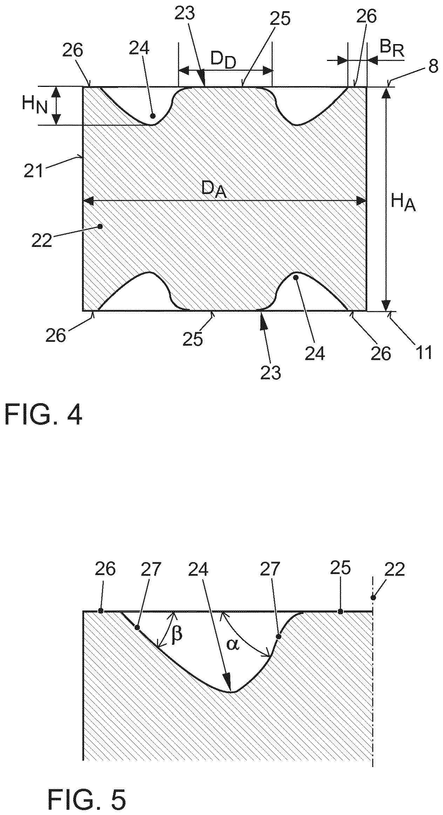

Die Figuren 4 und 5 zeigen eine vergrößerte Darstellung des erfindungsgemäßen Hilfselementes 2 mit Größenangaben zu den Winkeln an der Ringnut 24 sowie den Breiten der Ringnut 26 und des zentralen Stegbereiches 25.

Dabei weist die Ringnut 24 einen sich von den Stirnflächen 8, 11 ausgehenden verjüngenden Querschnitt auf. Die Seitenwände 27 der Ringnut 24 bilden daher jeweils einen von 0° und 180° abweichenden Winkel zur Achse 22 des zylindrischen Hilfselementes 2, wobei hier ein radial innenliegender Einlaufwinkel alpha und ein radial außen liegender Einlaufwinkel beta gebildet werden.

Des Weiteren weist das Hilfselement 2 eine axiale Gesamthöhe HA, einen Gesamtdurchmesser DA, eine Gesamtbreite DD des zentralen Steges 25, eine Tiefe bzw. Höhe HN der Ringnut 24 sowie eine Breite BR des Ringsteges 26 auf.

Als besonders vorteilhaft haben sich hier die folgenden Dimensionierungsbereiche erwiesen:

$$20\% < DD/DA < 60\%$$

$$0\% < BR/DA < 30\%$$

$$HN/HA < 40\%$$

$$45° < alpha < 87°$$

$$5° < beta < 87°$$

Einen großen Einfluss auf die Funktionsweise des Hilfselementes 2 hat die Ausbildung des zentralen Stegbereiches 25, sowie des Ringsteges 26, die durch die Ringnut 24 voneinander getrennt sind. Dabei läuft die Kontur der Ringnut 24 vom Steg 25 aus radial nach außen zunächst abfallend und nach einem Scheitelpunkt flacher wieder ansteigend in Richtung Ringsteg 26. Während der Ringsteg 26 die form- und kraftschlüssige Verbindung mit dem ersten Bauteil 1 besonders unterstützt, stellt der zentrale Stegbereich 25 Materialvolumen für die weitere Ausformung des Schweißbuckels 9 zur Verfügung.

Das Hilfselement 2 kann dabei kaltgeschlagen gefertigt werden. Bei dieser Herstellung bietet der W-förmige Querschnitt den Vorteil, dass herstellungsbedingte Toleranzen im zugeschnittenen Rohling im zentralen Stegbereich 25 des fertigen Hilfselementes 2 aufgenommen werden und somit in der Grundkontur (Länge und Durchmesser) nahezu identische Elemente hergestellt werden können. Auf die dadurch entstehende Schwankung der Höhe des zentralen Steges 25 regiert der Prozess des Einpressens (Einprägen) sehr tolerant, da der Steg 25 matrizenseitig lediglich flach gedrückt wird und stempelseitig nur dazu dient Materialvolumen für die Schweißbuckelverprägung zur Verfügung zu stellen. Somit bleibt auch eine mögliche Prozessüberwachung mittels Kraft-Weg-Verlauf von einer Schwankung der Steghöhe 25 nahezu unbeeinflusst.

**Bezugszeichenliste**

1      erstes Bauteil
2      Hilfselement
3      Fügevorrichtung
4      Matrize
5      Niederhalter
6      Stempel
7      obere Stirnfläche von (1)
8      erste Stirnfläche von (2)
9      Schweißbuckel
10      Hinterschnitt
11      zweite Stirnfläche von (2)
12      Ausformung an (1)
13      untere Stirnfläche von (1)
14      2. Bauteil
15      Klebstoff
16      Schweißelektrode
17      Schweißelektrode
18      Stirnseite des Stempels (6)
19      Ausnehmung in Stirnseite (18)
20      Schweißlinse
21      zylindrische Umfangswand von (2)
22      Achse von (2)
23      Stirnseiten von (2)
24      Ringnut in (23)
25      zentraler Steg in (23)
26      Ringsteg in (23)
27      Seitenwand der Ringnut (24)
alpha      radial innenliegender Einlaufwinkel
beta      radial außen liegender Einlaufwinkel
HN      Tiefe der Ringnut (24)
HA      axiale Höhe von (2)

**Patentansprüche**

1. Hilfselement (2) zum Einpressen in ein erstes Bauteil (1) für ein Schweißverfahren zwischen zwei nicht direkt miteinander verschweißbare Bauteile (1,14), wobei das Hilfselement (2) zylinderförmig ausgebildet ist,
**dadurch gekennzeichnet,**
**dass** das Hilfselement (2) an seinen beiden, die zylindrische Umfangswand (21) in Achsrichtung abschließenden Stirnseiten (23, 8, 11) die gleichen Konturen aufweist, wobei die Stirnseiten (23, 8, 11) in einem durch die Achse (22) verlaufenden Längsschnitt eine W-förmige Kontur aufweisen, die Stirnseiten (23, 8,11) eine Ringnut (24) aufweisen, die einen axial zentral angeordneten Stegbereich (25) von einem radial außen liegenden Ringstegbereich (26) trennt, wobei die Abmessungen der Ringnut (24), des zentralen Stegbereiches (25) und des radial außen liegenden Ringstegbereiches (26) in beiden gegenüberliegenden Stirnseiten (23, 8, 11) des Hilfselementes (2) identisch sind, wobei die Ringnut (24) einen sich verjüngenden Querschnitt aufweist, und wobei ein radial innen liegender Einlaufwinkel (alpha) der Ringnut (24) steiler zu einer Längsachse des Hilfselementes (2) ausgebildet ist, als ein radial außen liegender Einlaufwinkel (beta) der Ringnut (24).

2. Hilfselement (2) nach Anspruch 1, **dadurch gekennzeichnet, dass** der radial innenliegende Einlaufwinkel (alpha) in einem Bereich von 45 Grad bis 87 Grad, der radial außen liegende Winkel (beta) in einem Bereich von 5 Grad bis 86 Grad liegt, dass die Tiefe (HN) der Ringnut maximal 40% der Gesamthöhe (HA) des Hilfselementes (2) beträgt, dass die Breite (BR) des Ringsteges (26) maximal 30% der Breite (DD) des zentralen Steges (25) beträgt und dass die Breite (DD) des zentralen Steges (25) im Verhältnis zum Außendurchmesser (DA) des Hilfselementes (2) in einem Bereich zwischen 20% und 60% liegt.

## Claims

1. Auxiliary element (2) for pressing into a first component (1) for a welding process between two components (1, 14) which cannot be directly welded to each other, wherein the auxiliary element (2) is of cylindrical design, **characterized in that** the auxiliary element (2) has the same contours on its two end sides (23, 8, 11) terminating the cylindrical circumferential wall (21) in the axial direction, wherein, in a longitudinal section running through the axis (22), the end sides (23, 8, 11) have a W-shaped contour, the end sides (23, 8, 11) have an annular groove (24) which separates an axially centrally arranged web region (25) from a radially outer annular web region (26), wherein the dimensions of the annular groove (24), of the central web region (25) and of the radially outer annular web region (26) are identical in both opposite end sides (23, 8, 11) of the auxiliary element (2), wherein the annular groove (24) has a tapering cross section, and wherein a radially inner inlet angle (alpha) of the annular groove (24) is designed to be steeper with respect to a longitudinal axis of the auxiliary element (2) than a radially outer inlet angle (beta) of the annular groove (24).

2. Auxiliary element (2) according to Claim 1, **characterized in that** the radially inner inlet angle (alpha) lies within a range of 45 degrees to 87 degrees, and the radially outer angle (beta) lies within a range of 5 degrees to 86 degrees, **in that** the depth (HN) of the annular groove is at maximum 40% of the overall height (HA) of the auxiliary element (2), **in that** the width (BR) of the annular web (26) is at maximum 30% of the width (DD) of the central web (25), and **in that** the width (DD) of the central web (25) in relation to the outer diameter (DA) of the auxiliary element (2) lies within a range of between 20% and 60%.

## Revendications

1. Elément auxiliaire (2) destiné à être enfoncé dans un premier composant (1) en vue d'une opération de soudage entre deux composants (1, 14) qui ne peuvent être soudés directement l'un à l'autre, l'élément auxiliaire (2) présentant la forme d'un cylindre, **caractérisé en ce que** l'élément auxiliaire (2) présente le même contour sur ses deux côtés frontaux (23, 8, 11) qui se raccordent dans la direction axiale à la paroi périphérique cylindrique (21),

**en ce que** les côtés frontaux (23, 8, 11) présentent dans une coupe longitudinale qui passe par l'axe (22) un contour en forme de W,

**en ce que** les côtés frontaux (23, 8, 11) présentent une rainure annulaire (24) qui sépare une partie de nervure axiale centrale (25) d'une partie de nervure annulaire radialement extérieure (26),

**en ce que** les dimensions de la rainure annulaire (24), de la partie de nervure centrale (25) et de la partie de nervure annulaire radialement extérieure (26) sont identiques dans les deux côtés frontaux (23, 8, 11) opposés de l'élément auxiliaire (2),

**en ce que** la rainure annulaire (24) présente une section transversale qui se rétrécit, l'angle intérieur de pénétration (alpha) situé radialement à l'intérieur de la rainure annulaire (24) étant plus accusé par rapport à l'axe longitudinal de l'élément auxiliaire (2) que l'angle de pénétration (beta) situé radialement à l'extérieur de la rainure annulaire (24).

2. Elément auxiliaire (2) selon la revendication 1, **caractérisé en ce que** le l'angle intérieur de pénétration (alpha) situé radialement à l'intérieur est compris dans la plage de 45 degrés à 87 degrés et l'angle de pénétration (beta) situé radialement à l'extérieur dans une plage de 5 degrés à 86 degrés, **en ce que** la profondeur (HN) de la rainure annulaire représente au maximum 40 % de la hauteur totale (HA) de l'élément auxiliaire (2), **en ce que** la largeur (BR) de la nervure annulaire (26) représente au maximum 30 % de la largeur (DD) de la nervure centrale (25) et **en ce que** le rapport entre la largeur (DD) de la nervure centrale (25) et le diamètre extérieur (DA) de l'élément auxiliaire (2) est compris dans une plage de 20 % à 60 %.

FIG. 1A

FIG. 1B

FIG. 2A

FIG. 2B

FIG. 3A

FIG. 3B

FIG. 3C

FIG. 3D

FIG. 3E

FIG. 3F

FIG. 4

FIG. 5

# EP 3 031 564 B1

**IN DER BESCHREIBUNG AUFGEFÜHRTE DOKUMENTE**

**In der Beschreibung aufgeführte Patentdokumente**

- US 6722013 B1
- DE 102012020222 A1
- DE 102012020223 A1
- WO 2012041515 A
- WO 2015024698 A1